(19) Europäisches Patentamt
European Patent Office
Office européen des brevets

(11) **EP 3 249 369 B1**

(12) **EUROPEAN PATENT SPECIFICATION**

(45) Date of publication and mention of the grant of the patent:
**09.10.2019 Bulletin 2019/41**

(21) Application number: **17170101.4**

(22) Date of filing: **09.05.2017**

(51) Int Cl.:
*G01J 5/00* (2006.01)  *G01J 5/08* (2006.01)
*G01J 5/04* (2006.01)

(54) **CONTACTLESS TEMPERATURE SENSOR FOR COPPER WIRES IN MOVEMENT**

KONTAKTLOSER TEMPERATURSENSOR FÜR KUPFERDRÄHTE IN BEWEGUNG

DÉTECTEUR DE TEMPÉRATURE SANS CONTACT POUR FILS DE CUIVRE EN MOUVEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.05.2016 IT UA20163785**

(43) Date of publication of application:
**29.11.2017 Bulletin 2017/48**

(73) Proprietor: **ELAV S.R.L.**
**28062 Cameri (NO) (IT)**

(72) Inventor: **LAVATELLI, Alberto**
**28062 Cameri (NO) (IT)**

(74) Representative: **Martegani, Franco et al**
**Via Carlo Alberto 41**
**20900 Monza (IT)**

(56) References cited:
DE-B3-102005 031 289    GB-A- 1 216 052
US-A- 3 559 726

**Description**

The present invention relates to a contactless temperature sensor for copper wires in movement.

The most widely-used contactless temperature sensors exploit the physical principle of radiation for transducing the surface temperature of a generic specimen to be measured. The emission spectrum of a generic grey body obeys Planck's law, which expresses the thermal flow $I$ irradiated by a black body in relation to the temperature $T$ and wavelength $\lambda$ (equation 1): wherein $h$ is Planck's constant, $c$ the velocity of light in the medium irradiated and $\lambda_B$ the Stefan-Boltzmann constant.

$$I(T, \lambda) = \frac{2hc^2}{\lambda^5} \cdot \frac{1}{e^{\frac{hc}{k_B} \cdot \frac{1}{\lambda T}}} \qquad (1)$$

The previous law completely describes the emission spectrum for a black body (ideal thermal radiation absorber and emitter), for which the wavelength $\lambda_{max}$ of the emissivity peak can be calculated through Wien's law (equation 2) wherein b is Wien's displacement constant equal to 2.897 77 x $10^{-3}$ mK

$$\lambda_{max} = \frac{b}{T} \qquad (2)$$

Considering a temperature range from 20°C to 250°C, the emission peak varies from 9.88 $\mu$m to 5.54 $\mu$m, i.e. within the infrared radiation region. For this reason, the temperature of a body can be transduced by measuring the infrared irradiation spectrum (spectrometric measurements). Alternatively, instead of measuring the irradiation spectrum, the total energy flow of a body can be measured in the infrared spectrum band and correlated with a calibration curve containing the energy flows of a black body at known temperatures (pyrometric measurements).

This latter technique is the most widespread as the generic specimen to be measured will not have the same characteristics as a black body, but rather will not be an ideal emitter of infrared radiation. The emission peak $\lambda_{max}$ is consequently generally positioned on different wavelengths (generally higher) than those of a black body, making spectrometric measurements complex. Furthermore in any band of wavelengths, the power irradiated per surface unit $q''$ will generally be lower.

The ratio between the power irradiated per surface unit of a generic specimen to be measured $q''_M$ and that irradiated by a black body $q''_{bb}$ is called emissivity $\varepsilon$ and is an actual characteristic of materials. Consequently, the pyrometric measurement can be easily compensated if the emissivity of the material forming the radiating surface of the specimen to be measured, is known.

$$\varepsilon = \frac{q''_M}{q''_{bb}} \qquad (3)$$

Table 1 hereunder shows some examples

Table 1 Emissivity in the spectral band 8 $\mu$m - 14 $\mu$m for various materials

| Material | $\varepsilon$ |
| --- | --- |
| Aluminium | 0.2 - 0.3 |
| Oxidized steel | 0.7 - 0.9 |
| Oxidized iron | 0.65 - 0.9 |
| Titanium | 0.6 - 0.7 |
| Ceramics | 0.95 |
| Natural wood | 0.9 - 0.95 |
| Plastic material | 0.95 |

Ultimately, the pyrometric measurement makes use of the Stefan-Boltzmann law for grey bodies, for which the thermal flow irradiated is equal to:

$$q''_M = \varepsilon \sigma \, T_M{}^4 \qquad\qquad (4)$$

wherein $\sigma$ is the Stefan-Boltzmann constant equal to 5.670 367 x $10^{-8}$ Wm$^{-2}$K$^{-4}$ and $T_M$ is the surface temperature of the specimen to be measured.

In the case of thin copper wires in movement, the contactless temperature measurement is currently effected in some of the following modes.

The behaviour of copper with respect to its infrared emission is, in fact, quite unusual. In many spectral bands, copper behaves as a very poor infrared emitter and, if adequately polished, completely reflects any incoming infrared radiation, as indicated in Table II below.

Table II

| Emissivity of copper for various bands | | | |
| --- | --- | --- | --- |
| Finishing | 1$\mu$m $\pm$ 0.01$\mu$m | 1.6$\mu$m $\pm$ 0.01$\mu$m | 8$\mu$m - 4$\mu$m |
| Polished | 0 | 0.03 | 0 |
| Rough | 0 | 0.05-0.2 | 0 |
| Oxidized | 0.2 - 0.8 | 0.2-0.9 | 0.4-0.8 |

As can be clearly seen in Table II, the temperature measurement of a copper body by means of infrared pyrometry is difficult to effect. In particular in the band typical of commercial pyrometers 8 $\mu$m - 14 $\mu$m, only oxidized copper shows emissivity values compatible with a pyrometric measurement.

Due to the hardening and annealing operations, a drawn copper wire has a smooth and highly infrared reflecting surface. In addition, due to the small dimensions of drawn wires, with a diameter ranging from 0.2 mm to 1.5 mm, a generic pyrometer must deal with extremely limited radiating surfaces. The joint action of low emissivity and limited radiating surface consequently generates an extremely limited energy flow entering the pyrometric sensor. In theory, the pyrometric sensor could be equipped with high magnification optics so as to obtain extremely small measurement spots, comparable with the dimensions of a drawn wire. The movement of copper wires, however, is not completely straight with a velocity v, but there is an insistence of transversal vibrations (with an amplitude of various millimetres) which distort the measurement as the focal depth of high magnification optics is extremely limited (about 0.1 mm - 0.3 mm for the applications indicated).

This situation makes direct pyrometric reading unfeasible, and for this reason, the contactless reading of the temperature of copper has required the implementation of "ad hoc" systems.

A first measurement possibility, for example, is through transduction systems with optical amplification.

As shown in Table II, polished copper shows very small emissivity values in the proximity of wavelengths of 1.6 $\mu$m. In order to capture this weak irradiated flow, the irradiation of the material can be concentrated towards a focal point in which a specific pyrometer is positioned through the use of concentrating mirrors.

This solution allows infrared detectors to see the copper wire with an apparent emissivity higher than the real value. In practice, the whole flow irradiated can be concentrated, through a "radiative magnifying glass", in the measurement spot of the pyrometer, thus obtaining an amplification of the energy irradiated per surface unit.

A second measurement system of copper wires used is convective heat exchange transduction.

In this system, there is the possibility of measuring the temperature of copper wires by exploiting convective heat exchange phenomena which intervene between the surface of the wire and the bodies or surrounding environment.

With this system, two methods can be mentioned which are briefly indicated hereunder.

A first measurement method consists in putting a compensator body in the vicinity of the wire (so-called thermal equilibrium measurement). The compensator must have good thermal diffusion properties, so that it can easily absorb the convective heat flow generated by the hot wire. Using the thermal resistance method, the thermal flow entering the compensator $q''_C$ is purely convective and is equal to:

$$q''_C = h_i \cdot (T_M - T_C) \qquad\qquad (5)$$

wherein $h_i$ is the wire/compensator convective exchange coefficient and $T_C$ the temperature of the compensator itself. By adding a heat source having a power $Q_i$ inside the compensator and insulating the same so that only the exchange surface S between the compensator and wire remains uncovered, in stationary regime, the temperature of the compensator, less losses, is equal to:

$$T_C = T_M + \frac{\dot{Q_i}}{Sh_i} \qquad (6)$$

Consequently, by inserting a temperature transducer in the compensator and subsequently thermostat-regulating the same in order to nullify the power supplied $Q_i$, the compensator is brought to equilibrium with the drawn copper wire. As the wire moves rapidly, the process can effectively be considered as being adiabatic, and therefore the thermal losses are negligible and solutions can be found that effectively exploit the principle. Commercial solutions are also available with excellent maturity such as SIKORA Wire Temp 6000.

A further method for measuring the temperature of a copper wire in movement (so-called heat transfer measurement) is to create a calibrated convective transfer chamber. The copper wire enters a chamber in which a moving gaseous flow (typically air) is injected, creating forced convection phenomena. In this regime, the gas exchanges heat with the wire. The temperature of the gas at the inlet of the system $T_I$ is therefore generally different from that at the outlet $T_U$. Furthermore, as the wire is moving at a constant rate $v$ inside the cavity, it is reasonable to assume that the temperature of the same is constant during the exchange process. The temperature of the wire is therefore directly proportional to the enthalpy of the convector gases:

$$T_M \propto T_U - T_I \qquad (7)$$

After an adequate calibration procedure, the temperature of the drawn wire can therefore be transduced from the temperature difference of the gases. There are examples of measurement devices produced with the physical principle described above.

These known systems, however, have various problems due to their performances, which are not completely satisfactory, and their excessive cost.

Devices are used and available on the market, that exploit some of the solutions indicated above. Thermal equilibrium transduction systems, for example, are transducers that have a certain maturity and a high degree of measurement accuracy. They are active sensors, however, i.e. they are systems provided with thermoregulation and control apparatuses for ensuring thermal equilibrium. This means that they themselves are complex and costly machines. Furthermore, the complexity of the system involves a rather high probability of breakdown.

A general objective of the present invention is to provide a contactless temperature sensor for copper wires in movement which is capable of solving the drawbacks of the known art indicated above in an extremely simple, economical and particularly functional manner.

A further objective of the present invention is to provide a highly functional sensor, with few or limited breakdown problems.

The document GB 1216052 discloses a sensor according to the preamble of claim 1.

The document US3559726 and DE 102005031289 disclose a temperature sensor of an advancing wire which use an intermediate detecting element.

The problems set out above are solved by a contactless temperature sensor with the features of claim 1. Favourable modifications are defined in the dependent claims.

The structural and functional characteristics of the present invention and its advantages with respect to the known art will appear even more evident from the following description, referring to the enclosed schematic drawings, which show an embodiment example of the invention itself. In the drawings:

- figure 1 is a functional scheme of a sensor according to the present invention;
- figure 2 is a scheme of convective flows of cavities inside the sensor of figure 1;
- figure 3 is a sectional view according to the line III-III of figure 4 which shows a constructive scheme of a sensor according to the present invention;
- figure 4 is an end view of the sensor shown in figure 3.

With reference to the figures in general, it should be pointed out that a contactless temperature sensor for copper wires in movement according to the invention is a temperature sensor for drawn copper wires belonging to the family of convective exchange transducers.

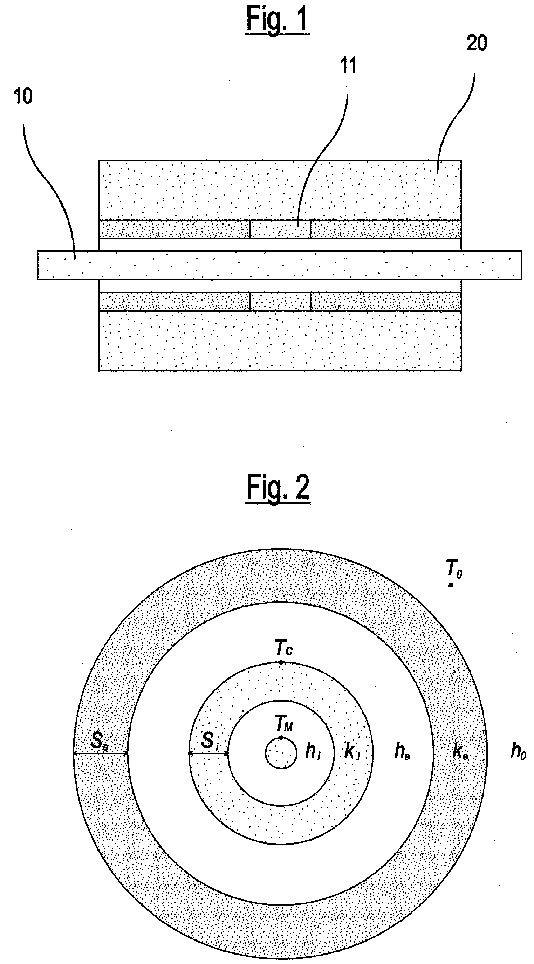

In this respect, it should be noted that a sensor of this type exploits an insulated cavity for its functioning, schematized in 20 in figure 1, inside which there is a highly diffusive sensitive element 11, also schematized in figure 1. According to the invention, a particular geometry of the insulated cavity 20 is created, which facilitates the generation of convective phenomena with the passage of the wire in the sensitive element 11. This sensitive element 11 receives heat by convection from a passing drawn copper 10 wire. The drawn wire 10 is in fact moving with a uniform velocity v inside the cavity 20. Said wire 10 consequently transfers heat to the sensitive element 11 which allows the transduction of the temperature of the wire itself 10.

It should be noted, in fact, that as the hot wire 10 is not in thermal equilibrium with the environment, it exchanges heat by convection with nearby bodies. Furthermore, as it moves at a constant rate v, it carries with it a film of air that implies the presence of moderately forced convective phenomena.

It has therefore been noted that in this situation, the convective exchange can be modeled according to the following equation:

$$h_i \left[ \frac{W}{m^2 K} \right] = 1.45 - 0.0012 \cdot v + 9.9 \sqrt{0.0012 \cdot v} \quad (8)$$

The temperature measurement system of the sensor of the invention exploits the previous emphasized indication for transducing the temperature of the drawn copper wire 10. Assuming, in fact, that the copper wire 10 is inserted in an adiabatic cavity (thermally insulated) 20, having, in its centre, a high diffusion heat sensitive element 11 in close contact with the copper, the flow diagram of figure 2 is obtained.

In this diagram, $T_M$ indicates the temperature of the copper wire 10, $T_C$ the temperature of the outer surface of the measurement cartridge and $T_0$. the outer atmospheric temperature. These temperatures in this situation are the temperatures of interest.

The following heat exchange coefficients are also defined:

$$\begin{cases} U_T = \left( \frac{1}{h_i} + \frac{s_i}{k_i} + \frac{1}{h_\varepsilon} + \frac{s_\varepsilon}{k_\varepsilon} + \frac{1}{h_0} \right)^{-1} \\ U_i = \left( \frac{1}{h_i} + \frac{s_i}{k_i} \right)^{-1} \end{cases} \quad (9)$$

wherein $h_i$ is the convective exchange between copper wire and cavity, $k_i$ is the heat conductivity of the cavity, $h_\varepsilon$ is the convective exchange coefficient between cavity and sensor body, $k_\varepsilon$ is the heat conductivity of the sensor body, and finally $h_0$ is the convective exchange coefficient between sensor body and outside environment.

The temperature $T_C$ is equal to:

$$T_C = T_M - \frac{U_t}{U_i} (T_M - T_0) \quad (10)$$

In the configuration specified, it is assumed that:

- the measurement cartridge is constructed with a material having a high thermal diffusion;
- the interspace between cartridge and outer shell is sealed so as to insulate everything;
- the thickness of the material of the shell is considerable.

It follows that $U_T << U_i$, and it is therefore reasonable to approximate equation 10 as follows:

$$T_C \approx T_M - 0 \cdot (T_M - T_0) \approx T_M \quad (11)$$

In this way, it can be seen that by producing an insulated cavity in which a highly diffusive small cartridge is inserted, the cartridge itself can be brought to thermal equilibrium with the passing copper wire 10.

At this point, using a temperature transduction system $T_C$, the temperature $T_M$ of the copper wire 10 can be measured. The temperature transduction system of the measurement cartridge, however, must be as unobtrusive as possible, i.e. it must not remove thermal energy from the system. In this respect, the use of thermocouples or resistance thermometers is not recommended as they subtract heat from the cartridge by conduction, the temperature must therefore be measured using a contactless method.

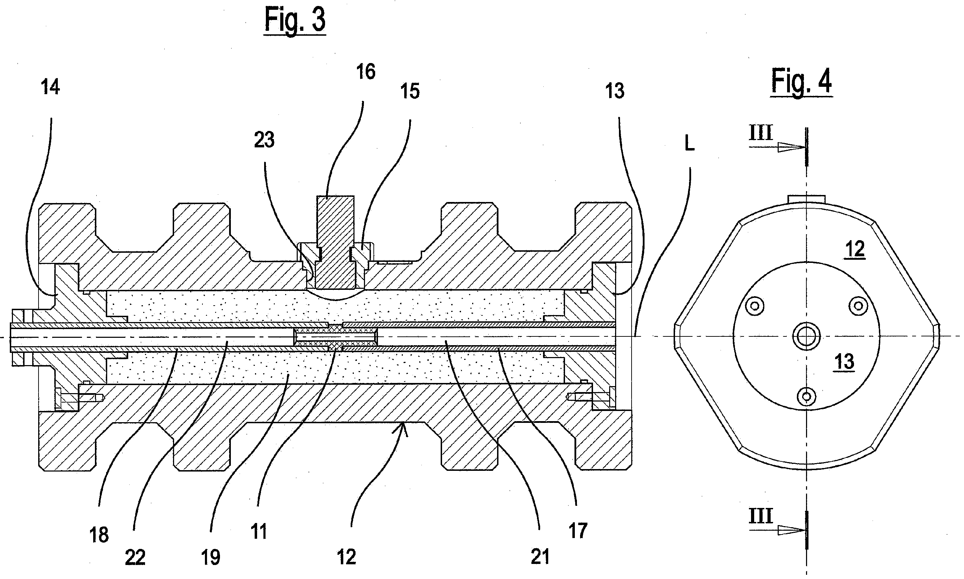

Figures 3 and 4 show a schematic example of a temperature sensor according to the invention.

For the correct functioning of the system indicated above, a construction scheme must be found which allows the physical constraints previously specified to be verified and respected. In particular, the requirements are:

- to construct a cavity thermally insulated from the outside environment;
- to insert a sensitive element made of a highly diffusive material, inside the cavity;
- to measure the temperature of the sensitive element with a contactless method.

A preferable optimum configuration of the sensor of the invention, illustrative but non-limiting, is that shown in figure 3. In this example, a body of the transducer according to the invention is composed of an outer sensor body 12, made of aluminium, for example series 6,000, which is hollow and has an overall sealed convective cavity 19.

An assembly flange 13 is in fact positioned at a first end integral with the convective cavity 19, whereas a second supporting flange 14 is positioned at the other end of the convective cavity 19 and allows the sealing of the sealed cavity 19.

A first calibrated tubular element 17 is inserted and carried by the assembly flange 13, for example made of Inconel, in Zinc alloy which, as is known, has a low thermal diffusion value. The tubular element 17 is directed according to a longitudinal axis L of the outer sensor body 12 and contains two insulated half-cavities as can be seen more clearly hereunder.

A second calibrated tubular element 18 is inserted and carried by the supporting flange 14, also made for example in the same material and directed as for the first tubular element 17.

A sensitive element 11 composed of a bushing, for example made of aluminium varnished with emissive enamel, is inserted between the two tubular elements 17 and 18.

The sensor of the invention is completed by the provision of a calibrated pyrometer 16 which is positioned inserted in a flanged bushing 15 in a side wall of the outer sensor body 12 facing the sealed cavity 19. The flanged bushing 15 is positioned for supporting the pyrometer 16. The calibrated pyrometer 16 can, for example, have a dimension of 8 $\mu$m - 14 $\mu$m and has "close focus" optics.

It can be observed how the first calibrated tubular element 17 defines a first front insulated half-cavity 21 and how the second calibrated tubular element 18 defines a rear insulated half-cavity 22, both positioned in the sealed cavity.

The central part of the sensor of the invention is the formation of a insulated cavity in which the copper wire 10 runs. In this example, the design selection of constructing the insulated cavity with a calibrated tube made of Inconel 600 has been implemented, as zinc alloys have the lowest thermal diffusion values of all metals. This makes these alloys good heat insulators. Furthermore, Inconel alloys have high properties of hardness and abrasion resistance, which is why they are not affected by wear in the use specified.

In order to insert the sensitive element 11 (the measurement cartridge) inside the insulated cavity, the insulated cavity must be divided into two half-cavities 21 and 22. The sensitive element 11, consisting of a bushing whose ends are force-inserted into terminal ends facing the first calibrated tubular element 17 and second calibrated tubular element 18 made of Inconel 600, is subsequently inserted between the two half-cavities 21 and 22. The measurement cartridge is therefore integral with the two half-cavities 21, 22 and is made of aluminium, a material having an optimum thermal diffusion.

In this way, the bushing is insulated from the outside environment thanks to the two half-cavities made of Inconel 600 and sealed cavity 19 surrounding it, verifying the assumptions that led to the formulation of equation 11. Furthermore, the measurement cartridge is coated with a polymeric enamel which has a high infrared emissivity ($\varepsilon$ = 98%) within the band 8 $\mu$m - 14 $\mu$m.

As previously indicated, the insulation of the cavity with respect to the outside environment is crucial for the functioning of the system. In order to obtain this result, a sensor body 12 having a considerable thickness and made of Anticorodal aluminium was designed. The sensor body 12 has a large-sized cylindrical internal cavity, sealed by two flanges 13, 14 whose function is to support the insulated cavity 21, 22.

In this configuration, the sensitive element 11 is insulated from the outside environment as the sealed chamber 19 guarantees an interspace having a very low convective exchange coefficient, about 0.5 W m$^{-2}$ K - 1.1 W m$^{-2}$ K, depending on the humidity conditions of the air contained in the interspace. Furthermore, the considerable thickness of the walls of the sensor body 12 ensures a low heat transmission by conduction. Finally, the construction in Anticorodal guarantees optimum atmospheric and chemical corrosion resistance.

The temperature measurement $T_C$ of the sensitive element 11 is effected thanks to an infrared pyrometer 16 within the commercial band 8 $\mu$m - 14 $\mu$m. The installation of the pyrometer 16 inside the sensor body 12 is effected by means of a calibrated holing 23 which houses a flanged and externally threaded bushing 15 in which the pyrometer 16 is screwed. The bushing 15 is inserted in a calibrated holing 23 which maintains the sealing of the interspace between the sensor body and measurement cavity, guaranteeing the insulation of the transducer.

The sensor according to the present invention therefore has significant advantages with respect to what is so far known in the specific application field.

Contrary to the known art, the sensor of the invention is a passive sensor, as it is only based on thermal exchange which is generated by a drawn copper wire 10 passing through an insulated cavity, without the need for actively moderating said exchange. The wire passes inside the cavity and exchanges heat with a sensitive element 11 which is passively brought to thermal equilibrium with the specimen to be measured. There are no regulation and control mechanisms, as the system is inherently more reliable and available. Furthermore the measurement cavity is made of a wear-proof material, which guarantees the possibility of using the sensor for years without maintenance requirements.

In the presentation of thermal exchange sensors, there is typically the tendency to identify them as sensors that do not require calibration, as their capacity of being brought to equilibrium with a specimen to be measured does not depend on the specimen itself. This assertion, however, is incorrect and, in fact, potentially deceptive. Whereas on the one hand it is true that the machine, when active, by its very nature, does not require static calibration, it is also true that it functions thanks to closed-loop control systems, themselves based on a series of transducers that require periodic calibration. It is therefore true that, as the sensor of the present invention is a passive sensor, it definitely requires a calibration in the pyrometer which transduces the temperature $T_C$, it is also true, however, that sensors with thermal equilibrium such as those sold by SIKORA should be periodically calibrated with respect to the transducers on which it regulates in a closed loop.

Furthermore, on thermal equilibrium sensors, it is difficult to characterize and control the dynamic performances of the instrument. For these sensors, it is difficult if not impossible to adapt the bandwidth of the system to the requirements as the measurement bandwidth is equal to the bandwidth of the controller(s). The sensor of the invention, on the contrary, allows the bandwidth of the device to be adapted to the measurement requirements, the response, in fact, to the gradation of these systems depends exclusively on the thermal diffusion of the sensitive element. In other words, by changing the material of the cartridge, various transduction time constants are obtained, allowing freedom to calibrate the promptness of the sensor as desired according to the materials.

This type of construction of the sensor of the invention, moreover, allows the user to easily change the measurement cavities, which can therefore be personalized according to the production demands of the customers.

Last but not least, the sensor of the invention has a construction which is highly resistant to chemical agents and corrosive environments, guaranteeing continuous functioning for the user, without any particular cleaning or maintenance charges, except for a periodic calibration of the infrared pyrometer.

The forms of the structure for producing a sensor of the invention, as also the materials and assembly modes, can naturally differ from those shown for illustrative and non-limiting purposes in the drawings.

The objective mentioned in the preamble of the description has therefore been achieved.

The protection scope of the present invention is defined by the enclosed claims.

## Claims

1. A contactless temperature sensor for copper wires in movement, comprising a body of the sensor (12) which provides a first cavity (19) wherein a second cavity (21,22) is provided inside said first cavity, said second cavity having an axial development, **characterized in that** said first cavity (19) has an axial development also and it is thermally insulated from the environment and sealed at its opposite ends and said second cavity (21,22) is isolated from said first cavity (19) and in contact with the environment, said second cavity (21,22) being provided with a sensitive element in the centre made of a material having a high thermal diffusion (11) so that it easily absorb the convective heat flow generated by the said copper wire in movement during the passage of the wire in the sensitive element (11), a pyrometer (16) being positioned in said sensor body (12), which extends inside said first cavity (19) and faces said sensitive element with a high thermal diffusion (11).

2. The sensor according to claim 1, **characterized in that** said second cavity comprises a first calibrated tubular element (17) which defines a first isolated front half-cavity (21) and a second calibrated tubular element (18) which defines an isolated rear half-cavity (22), both positioned in the first cavity (19) and connected by said sensitive element having a high thermal diffusion (11).

3. The sensor according to claim 2, **characterized in that** both said first calibrated tubular element (17) and said second calibrated tubular element (18) are made of zinc alloy.

4. The sensor according to claim 3, **characterized in that** said zinc alloy is of the Inconel type.

5. The sensor according to one or more of the previous claims from 1 to 4, **characterized in that** said sensitive element with a high thermal diffusion (11) is coated with a polymeric enamel having a high infrared emissivity.

6. The sensor according to one or more of the previous claims from 2 to 5, **characterized in that** said sensitive element with a high thermal diffusion (11) is force-inserted into facing ends of both said first calibrated tubular element (17) and said second calibrated tubular element (18).

7. The sensor according to one or more of the previous claims from 1 to 6, **characterized in that** said sensitive element with a high thermal diffusion (11) is made of aluminium.

8. The sensor according to one or more of the previous claims from 1 to 7, **characterized in that** said first sealed cavity (19) in said sensor body (12) is formed by two end flanges (13,14) positioned at two opposite ends which support said insulated cavity (21,22).

9. The sensor according to one or more of the previous claims from 1 to 8, **characterized in that** said pyrometer (16) is positioned in said sensor body (12) inside an externally threaded flanged bushing (15) inserted in a calibrated holing (23) formed in the body of the sensor (12).

**Patentansprüche**

1. Kontaktloser Temperatursensor für in Bewegung befindliche Kupferdrähte, der einen Körper (12) des Sensor umfasst, der einen ersten Hohlraum (19) bereitstellt, wobei ein zweiter Hohlraum (21, 22) in dem ersten Hohlraum vorgestehen ist, wobei der zweite Hohlraum eine axiale Erstreckung aufweist, **dadurch gekennzeichnet, dass** der erste Hohlraum (19) ebenfalls eine axiale Erstreckung aufweist, wobei er thermisch von der Umgebung isoliert ist und an seinen entgegengesetzten Enden fest verschlossen ist, und der zweite Hohlraum (21, 22) von dem ersten Hohlraum (19) isoliert und mit der Umgebung in Kontakt ist, wobei der zweite Hohlraum (21, 22) mit einem Sensorelement (11) versehen ist, das mittig angeordnet und aus einem Material ist, das eine starke Wärmediffusion zeigt, so dass es problemlos den konvektiven Wärmefluss absorbiert, wie er von dem in Bewegung befindlichen Kupferdraht zeugt wird, während der Draht das Innere des Sensorelements (11) durchquert, wobei ein Pyrometer (16) in dem Sensorkörper (12 angeordnet ist, das sich in den ersten Hohlraum (19) erstreckt und dem Sensorelement (11) gegenüberliegt, das eine starke Wärmediffusion zeigt.

2. Sensor nach Anspruch 1, **dadurch gekennzeichnet, dass** der zweite Hohlraum einen ein erstes kalibriertes röhrenförmiges Element (17), das eine erste isolierte vordere Hohlraumhälfte (21) begrenzt, und ein zweites kalibriertes röhrenförmiges Element (18) umfasst, das eine isolierte hintere Hohlraumhälfte (22) begrenzt, wobei beide in dem ersten Hohlraum (19) angeordnet sind und durch das Sensorelement verbunden sind, das eine starke Wärmediffusion (11) zeigt.

3. Sensor nach Anspruch 2, **dadurch gekennzeichnet, dass** sowohl das erste kalibrierte röhrenförmige Element (17) als auch das zweite kalibrierte röhrenförmige Element (18) aus einer Zinklegierung sind.

4. Sensor nach Anspruch 3, **dadurch gekennzeichnet, dass** die Zinklegierung vom Typ Inconel ist.

5. Sensor nach einem oder mehreren der vorhergehenden Ansprüche 1 bis 4, **dadurch gekennzeichnet, dass** das Sensorelement (11), das eine starke Wärmediffusion zeigt, mit einem polymerartigen Email beschichtet ist, der einen hohen Infrarot-Emissionsgrad zeigt.

6. Sensor nach einem oder mehreren der vorhergehenden Ansprüche 2 bis 5, **dadurch gekennzeichnet, dass** das Sensorelement (11), das eine starke Wärmediffusion zeigt, unter Kraftaufwendung in sich gegenüberliegende Enden des ersten kalibrierten röhrenförmigen Elements (17) und des zweiten kalibrierten röhrenförmigen Elements (18) eingefügt wird.

7. Sensor nach einem oder mehreren der vorhergehenden Ansprüche 1 bis 6, **dadurch gekennzeichnet, dass** das Sensorelement (11), das eine starke Wärmediffusion zeigt, aus Aluminium ist.

8. Sensor nach einem oder mehreren der vorhergehenden Ansprüche 1 bis 7, **dadurch gekennzeichnet, dass** der erste fest verschlossene Hohlraum (19) innerhalb des Sensorkörpers (12) von zwei endständigen Flanschen (13, 14) gebildet wird, die an zwei entgegengesetzten Enden angeordnet sind, wobei sie den isolierten Hohlraum (21, 22) stützen.

9. Sensor nach einem oder mehreren der vorhergehenden Ansprüche 1 bis 8, **dadurch gekennzeichnet, dass** das Pyrometer (16) in dem Sensorkörper (12) innerhalb einer angeflanschten Buchse (15) mit Außengewinde angeordnet ist, die in eine kalibrierte Lochung (23) eingefügt, die in dem Körper (12) des Sensors gebildet ist.

**Revendications**

1. Détecteur de température sont contact pour fils de cuivre en mouvement, comprenant un corps du détecteur (12) qui fournit une première cavité (19), une seconde cavité (21, 22) étant prévue à l'intérieur de ladite première cavité, ladite seconde cavité ayant un développement axial, **caractérisé par le fait que** ladite première cavité (19) a également un développement axial et elle est isolée thermiquement de l'environnement et scellée de manière étanche à ses extrémités opposées et ladite seconde cavité (21, 22) est isolée de ladite première cavité (19) et en contact avec l'environnement, ladite seconde cavité (21, 22) étant munie au centre d'un élément sensible fait d'un matériau ayant une diffusion thermique élevée (11) de telle sorte qu'il absorbe aisément le flux de chaleur de convection généré par ledit fil de cuivre en mouvement pendant le passage du fil dans l'élément sensible (11), un pyromètre (16) étant positionné dans ledit corps de détecteur (12), lequel s'étend à l'intérieur de ladite première cavité (19) et fait face audit élément sensible ayant une diffusion thermique élevée (11).

2. Détecteur selon la revendication 1, **caractérisé par le fait que** ladite seconde cavité comprend un premier élément tubulaire calibré (17) qui définit une première moitié de cavité avant isolée (21) et un second élément tubulaire calibré (18) qui définit une moitié de cavité arrière isolée (22), tous deux étant positionnés dans la première cavité (19) et reliés par ledit élément sensible ayant une diffusion thermique élevée (11).

3. Détecteur selon la revendication 2, **caractérisé par le fait qu'**à la fois ledit premier élément tubulaire calibré (17) et ledit second élément tubulaire calibré (18) sont faits d'alliage de zinc.

4. Détecteur selon la revendication 3, **caractérisé par le fait que** ledit alliage de zinc est du type Inconel.

5. Détecteur selon une ou plusieurs des revendications 1 à 4, **caractérisé par le fait que** ledit élément sensible ayant une diffusion thermique élevée (11) est revêtu d'un émail polymère ayant une émissivité d'infrarouge élevée.

6. Détecteur selon une ou plusieurs des revendications 2 à 5, **caractérisé par le fait que** ledit élément sensible ayant une diffusion thermique élevée (11) est introduit à force dans des extrémités en regard dudit premier élément tubulaire calibré (17) et dudit second élément tubulaire calibré (18).

7. Détecteur selon une ou plusieurs des revendications 1 à 6, **caractérisé par le fait que** ledit élément sensible ayant une diffusion thermique élevée (11) est fait d'aluminium.

8. Détecteur selon une ou plusieurs des revendications 1 à 7, **caractérisé par le fait que** ladite première cavité scellée de manière étanche (19) dans ledit corps de détecteur (12) est formée par deux flasques (13, 14) positionnés à deux extrémités opposées qui supportent ladite cavité isolée (21, 22).

9. Détecteur selon une ou plusieurs des revendications 1 à 8, **caractérisé par le fait que** ledit pyromètre (16) est positionné dans ledit corps de détecteur (12) à l'intérieur d'une bague à bride à filetage extérieur (15) introduite dans un trou calibré (23) formé dans le corps du détecteur (12).

## Fig. 1

## Fig. 2

Fig. 3

Fig. 4

EP 3 249 369 B1

**EP 3 249 369 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1216052 A
- US 3559726 A
- DE 102005031289